# FASCICULE DE BREVET EUROPEEN

(11) **EP 3 324 610 B1**
(45) Date de publication et mention de la délivrance du brevet: **11.09.2019**
(21) Numéro de dépôt: 17201545.5
(22) Date de dépôt: 14.11.2017
(51) Int. Cl.: H04N 5/33, H04N 5/361, H04N 5/363, G01J 1/44, H04N 5/3745, G01J 1/46, G01J 5/22

(54) **CIRCUIT DE DETECTION A FAIBLE FLUX ET FAIBLE BRUIT**
DETEKTIONSSCHALTKREIS MIT SCHWACHEM ENERGIEFLUSS UND GERINGEM GERÄUSCH
LOW-FLOW AND LOW-NOISE DETECTION CIRCUIT

(30) Priorité: 21.11.2016 FR 1661322
(43) Date de publication de la demande: 23.05.2018
(73) Titulaire: LYNRED, 91120 Palaiseau (FR)
(72) Inventeur: AUFRANC, Sébastien, 38100 GRENOBLE (FR); SANSON, Eric, 38000 Grenoble (FR)
(74) Mandataire: Talbot, Alexandre

(56) Documents cités:
- EP-A1- 2 600 125
- WO-A1-2013/083889

## Description

### Domaine technique de l'invention

L'invention est relative à un circuit de détection.

### État de la technique

Les circuits de détection optique comprennent généralement un photodétecteur couplé à un circuit de lecture. Le circuit de lecture a pour fonction de convertir et éventuellement d'amplifier le signal provenant du photodétecteur afin qu'il puisse être traité.

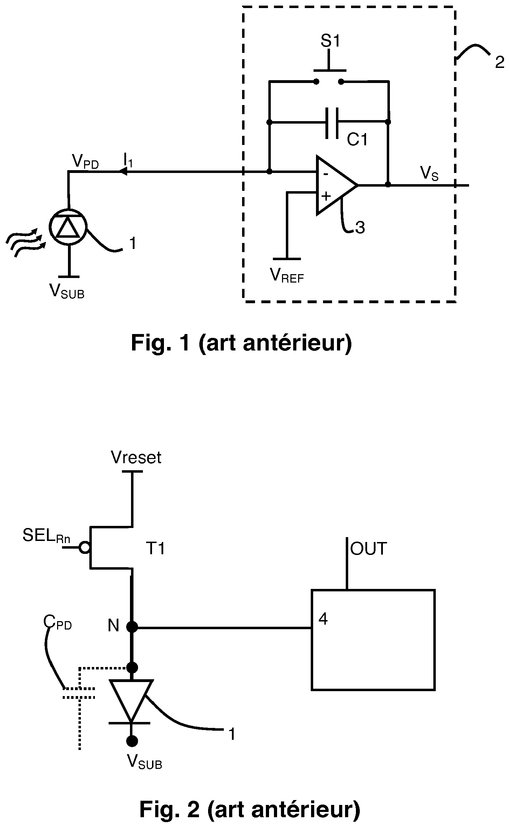

La figure 1 représente un exemple de circuit de détection couramment utilisé avec les photodétecteurs. Le circuit comporte un photodétecteur 1 et un circuit de lecture 2. Une borne du photodétecteur 1, la cathode sur l'exemple de la figure 1, est reliée au circuit de lecture 2. L'autre borne du photodétecteur 1, l'anode par exemple, est reliée au potentiel du substrat du photodétecteur V_{SUB}.

Le circuit de lecture 2 peut être du type intégrateur. Il possède deux fonctions : d'une part, il intègre le courant I₁ du photodétecteur 1 et ainsi convertit le courant en une tension V_{S} exploitable, et d'autre part, il assure la polarisation du photodétecteur 1. A titre d'exemple, le circuit de lecture 2 peut être réalisé par un amplificateur à transimpédance capacitif (« Capacitive Transimpedance Amplifier » en anglais, CTIA) représenté sur la figure 1. Un tel intégrateur comporte un amplificateur opérationnel 3. La première entrée de l'amplificateur 3, l'entrée négative, forme l'entrée du circuit de lecture 2 et la sortie de l'amplificateur 3 forme la sortie du circuit de lecture 2. La deuxième entrée de l'amplificateur, l'entrée positive sur l'exemple de la figure 1, reçoit un potentiel de référence V_{REF}. Le circuit de lecture 2 comporte également une capacité C1 d'intégration et un interrupteur S1 de remise à zéro connectés en parallèle entre la première entrée de l'amplificateur et la sortie de l'amplificateur. La sortie du circuit de lecture 2 délivre la tension V_{S} représentative du signal reçu.

Ce mode de réalisation est particulièrement efficace pour la détection et la gestion de signaux optiques moyens ou faibles, mais cette efficacité est obtenue au détriment de l'encombrement et de la consommation. Il s'avère par ailleurs que lorsque le photodétecteur reçoit un flux lumineux de très faible intensité, le rapport signal sur bruit est dégradé par l'émission de photons parasites émis par l'amplificateur implanté dans le pixel et il est très difficile d'obtenir des performances intéressantes.

Afin d'obtenir des capteurs très sensibles, le circuit de détection est réalisé de manière particulière au moyen d'une architecture de type SFD (Source Follower per Detector) illustrée à la figure 2. Ce type de capteur fonctionne avec des faibles conditions de rayonnement, c'est-à-dire avec un faible flux incident.

Comme dans les détecteurs conventionnels, le rayonnement incident est converti en une quantité d'électrons qui est représentative de la scène observée. Pour ce type de capteur, il est important de limiter le bruit électronique généré par le circuit de détection, c'est-à-dire la quantité d'électrons qui n'est pas liée à la scène observée. Un premier moyen de réduire la quantité d'électrons parasites est de limiter la consommation électrique du circuit ce qui incite à simplifier le circuit de détection.

L'intégration des charges émises par le photodétecteur est alors réalisée par le condensateur interne du photodétecteur.

Comme illustré à la figure 2, le circuit de détection comporte une photodiode 1 avec son condensateur interne C_{PD}. Le circuit comporte également un transistor de reset T1 qui réalise la connexion entre le photodétecteur 1 et une tension de polarisation Vreset. Le basculement du transistor de reset T1 entre un état passant et un état bloquant permet de faire basculer la photodiode 1 entre une polarisation inverse et un état flottant.

Lorsque la photodiode 1 est à l'état flottant, les charges électriques générées sont stockées dans le condensateur parasite C_{PD}. Au fur et à mesure que les charges électriques se stockent dans le condensateur C_{PD}, la tension aux bornes de la photodiode 1 évolue. Cette évolution des conditions de polarisation se traduit également par une dégradation de l'intégrité du signal, par exemple avec une évolution du taux de conversion du rayonnement électromagnétique reçu en une quantité d'électrons, par la variation de la valeur de la capacité du condensateur C_{PD}, ou par l'augmentation du courant de fuite parasite dans le détecteur.

La photodiode 1 est également connectée à un circuit de traitement 4 qui traite le signal émis par la photodiode 1.

Les charges générées par la photodiode 1 sont stockées en partie par le condensateur C_{PD} interne de la photodiode 1 ce qui se traduit par une évolution du potentiel du noeud d'intégration N connecté au circuit de traitement 4. La capacité électrique du noeud d'intégration N provient en partie de la capacité électrique de la photodiode 1 et en partie des capacités parasites des autres éléments reliés au noeud d'intégration N.

Cependant, dans cette architecture, il existe toujours un niveau de bruit important en terme d'électrons dans les détecteurs à faible flux. Par ailleurs, ces architectures présentent une faible linéarité dans la conversion du signal lumineux en un signal électrique car la détection est réalisée en laissant le photodétecteur à un potentiel flottant qui évolue au fur et à mesure que le condensateur C_{PD} se charge. Cette non linéarité ainsi que la perte d'intégrité du signal limite l'amplitude du signal et donc le nombre de charges stockables, ce qui limite le rapport signal sur bruit. Ce problème est particulièrement important pour les détecteurs qui tolèrent peu de variations sur leur potentiel de polarisation, par exemple les détecteurs infrarouges de bande LWIR.

### Objet de l'invention

On constate qu'il existe un besoin de prévoir un circuit de détection qui permette d'obtenir une meilleure corrélation entre le signal optique reçu et le signal électrique généré.

On tend à combler ce besoin au moyen d'un circuit qui comporte :
- un détecteur possédant un condensateur parasite et configuré pour délivrer des charges électriques en fonction d'un phénomène observé,
- un circuit de polarisation configuré pour polariser le détecteur durant une première période et laisser une première borne du détecteur à un potentiel flottant durant une deuxième période.
Le circuit est remarquable en ce qu'il comporte :
- un premier condensateur ayant une première borne connectée à la première borne du détecteur pour former un noeud de rétention avec le condensateur parasite, le noeud de rétention se trouvant à une valeur cible durant la première période et évoluant durant la deuxième période.
- un circuit de transfert des charges électriques depuis le condensateur parasite vers le premier condensateur, le circuit de transfert des charges électriques étant configuré pour polariser une deuxième électrode du premier condensateur de manière à décaler le potentiel du noeud de rétention vers la valeur cible,
- une borne de sortie délivrant une tension représentative du potentiel présent sur la deuxième borne du premier condensateur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un circuit de détection de type amplificateur transimpédance capacitif,
- la figure 2 représente, de manière schématique, un circuit de détection de type SFD,
- la figure 3 représente, de manière schématique, un mode de réalisation particulier d'un circuit de détection selon l'invention,
- la figure 4 représente, de manière schématique, plusieurs circuits de détection selon l'invention en relation avec une matrice de détection.

### Description de modes de réalisation préférentiels de l'invention

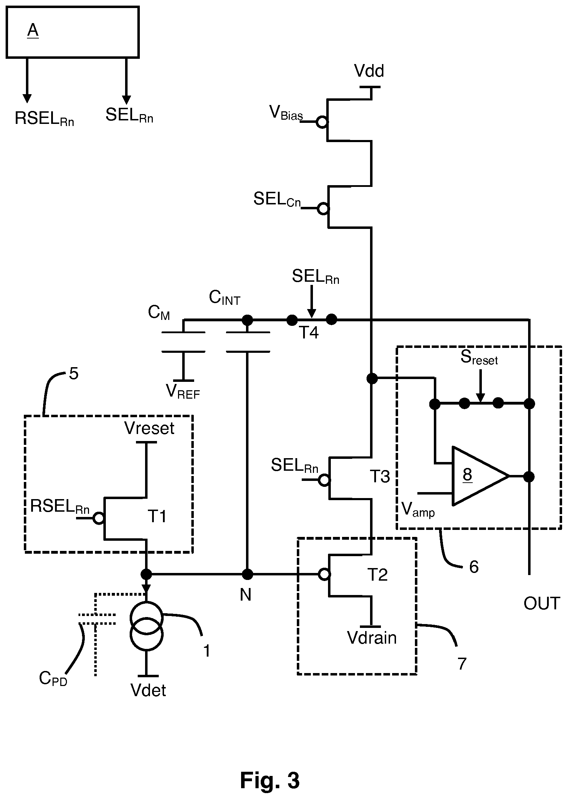

Comme cela est illustré à la figure 3, le circuit de détection reprend en partie le montage de type SFD (Source-Follower per Detector). Le circuit de détection comporte un photodétecteur 1 qui est préférentiellement une photodiode. Le photodétecteur 1 est associé à un circuit de polarisation 5. Le circuit de polarisation 5 permet de polariser le photodétecteur 1 entre des premier et second états différents selon des première et deuxième périodes.

Durant la première période, le photodétecteur 1 est dans le premier état, le photodétecteur 1 est avantageusement polarisé en inverse. Durant la deuxième période, le photodétecteur est dans le deuxième état, le photodétecteur 1 est laissé dans un état flottant où la polarisation initiale, par exemple la polarisation inverse, évolue en fonction de l'accumulation des charges reçues, ici l'évolution se fait vers la polarisation directe. L'acquisition du signal électromagnétique est réalisée lorsque le photodétecteur 1 est dans le deuxième état, c'est-à-dire durant la deuxième période. La mise à l'état flottant est réalisée en laissant l'électrode connectée au circuit de polarisation 5 à un potentiel flottant.

Dans le mode de réalisation illustré à la figure 3, le photodétecteur 1 est représenté schématiquement comme une source de courant car il délivre des charges électriques en fonction du rayonnement électromagnétique reçu. Le photodétecteur 1 peut être une photodiode, un dispositif à puits quantiques ou à multipuits quantiques ou tout autre détecteur qui est configuré pour transformer un rayonnement électromagnétique incident en des charges électriques.

Dans le mode de réalisation illustré à la figure 3, le circuit de polarisation 5 est réalisé de manière compacte au moyen d'un interrupteur T1 qui relie une source de tension de polarisation Vreset à une première électrode du photodétecteur 1. En basculant l'interrupteur T1 entre les états passant et bloquant, il est possible de basculer le photodétecteur 1 entre un état de polarisation inverse et un état flottant. Dans un mode de réalisation particulièrement compact, l'interrupteur T1 est formé par un transistor et avantageusement par un transistor à effet de champ. L'électrode de commande du transistor T1 est reliée à un circuit de commande A par exemple un générateur de signal qui émet le signal RSEL_{Rn}. En fonction du signal reçu, l'interrupteur T1 bascule entre des états passant et bloquant et le photodétecteur 1 bascule entre une polarisation inverse et un état flottant. La deuxième électrode du photodétecteur 1 est connectée à une source de tension qui délivre la tension Vdet. Le signal RSEL_{Rn} permet de définir les première et deuxième périodes.

Le circuit de détection comporte un noeud de rétention N formé par la connexion entre la première électrode du photodétecteur 1 et la première électrode d'un premier condensateur également appelé condensateur d'intégration C_{INT}. En d'autres termes, le noeud de rétention N est formé par le condensateur parasite C_{PD} et le condensateur d'intégration C_{INT}. Le noeud de rétention N est également connecté au circuit de polarisation 5.

Durant la période d'acquisition, c'est-à-dire la deuxième période, le photodétecteur 1 est dans son état flottant, c'est-à-dire qu'il est connecté au noeud de rétention N capacitif qui conserve les charges électriques générées par le photodétecteur. Le photodétecteur 1 transforme un rayonnement lumineux en des charges électriques qui sont stockées dans le condensateur parasite C_{PD} et également dans le condensateur d'intégration C_{INT}. L'accumulation des charges électriques dans ces deux condensateurs va entrainer une évolution du potentiel du noeud de rétention N capacitif. Lorsque le circuit de polarisation 5 place le photodétecteur 1 à un potentiel flottant, le noeud N voit son potentiel évoluer au fur et à mesure que les charges électriques sont générées et stockées dans les condensateurs C_{PD} et C_{INT}.

Comme indiqué ci-dessus, au fur et à mesure que la polarisation du noeud de rétention N évolue, les conditions de polarisation du photodétecteur 1 évoluent ce qui peut, au delà d'un certain seuil, dégrader l'intégrité du signal. En d'autres termes, pour un même signal optique instantané reçu, le photodétecteur 1 peut générer des quantités différentes de charges électriques selon son état de polarisation.

Cette dégradation de l'intégrité du signal rend plus difficile la comparaison de deux quantités d'électrons stockées sur le noeud de rétention N de manière quantitative. De manière à pouvoir plus facilement comparer deux informations stockées sur le noeud de rétention N, le dispositif comporte un circuit de modulation des conditions d'alimentation du photodétecteur 1 alors que ce dernier est à un potentiel flottant, c'est-à-dire durant la deuxième période.

Le circuit de modulation est configuré pour replacer le photodétecteur 1 dans son état initial de polarisation sans élimination des charges électriques générées ou au moins pour rapprocher le photodétecteur de son état initial défini durant la première période. Les conditions de polarisation aux bornes du photodétecteur étant plus stables dans le temps, il est alors plus facile de comparer deux signaux électriques pour comparer deux signaux optiques de manière quantitative
De manière avantageuse, la modification de polarisation aux bornes du photodétecteur 1 se fait par un transfert d'au moins une partie des charges électriques stockées dans le condensateur C_{PD} vers le condensateur d'intégration C_{INT}. Alors que dans l'art antérieur, les charges électriques sont éliminées pour revenir à l'état initial de polarisation, dans ce mode de réalisation, les charges électriques sont transférées pour éviter l'introduction de charges électriques parasites. Le transfert de charges se fait durant la période d'acquisition.

Le circuit de détection comporte avantageusement un circuit 6 de transfert configuré pour transférer des charges électriques depuis le condensateur C_{PD} vers le condensateur d'intégration C_{INT}. Le transfert des charges permet de retirer au moins une partie des charges accumulées dans le condensateur parasite C_{PD} et de les transférer dans le condensateur C_{INT}. Le déplacement des charges générées et stockées dans le condensateur C_{PD} permet de limiter les fluctuations dans les conditions de polarisation du photodétecteur 1. De cette manière, pour un même signal optique, le photodétecteur 1 génère sensiblement la même quantité de charges électrique sur une période de temps plus longue et il est plus facile de comparer quantitativement les signaux reçus.

Le circuit de transfert 6 est avantageusement configuré pour bloquer le transfert des charges électriques lorsque le potentiel du noeud de rétention atteint une valeur prédéfinie. Avantageusement cette valeur prédéfinie est égale ou proche de la valeur cible définie durant la première période.

Le déplacement des charges se fait à l'intérieur du noeud de rétention N en déplaçant les charges entre ses différentes composantes capacitives.

Le déplacement des charges électriques depuis le condensateur C_{PD} vers le condensateur C_{INT} se fait en injectant des charges électriques dans la deuxième électrode du condensateur C_{INT}. Par exemple, le déplacement des charges électriques se fait en modifiant la polarisation de la deuxième électrode du condensateur C_{INT}, par exemple en appliquant une tension sur la deuxième électrode.

En comparaison d'un mode de réalisation où un nombre fixe de charges électriques est transféré du condensateur C_{PD} vers le condensateur C_{INT} à chaque fois que le circuit de transfert 6 est activé, il est avantageux de transférer toutes les charges électriques stockées de manière à replacer le photodétecteur 1 dans des conditions prédéfinies et préférentiellement dans des conditions de polarisation plus proches du démarrage de la période d'acquisition.

Il est alors avantageux d'utiliser un circuit 7 de mesure de la valeur de potentiel du noeud de rétention N qui est configuré pour mesurer la valeur de potentiel du noeud de rétention N.

Cette architecture particulière permet de mesurer la valeur de potentiel du noeud de rétention N. Il est alors possible d'initier et/ou d'arrêter le transfert des charges électriques du condensateur C_{PD} vers le condensateur d'intégration C_{INT} en fonction de la valeur de potentiel du noeud de rétention N.

Le transfert peut éventuellement être conditionné au fait que le potentiel du noeud de rétention N atteint une valeur seuil mesurée par le circuit de mesure 7.

En replaçant le noeud de rétention N à une valeur cible qui est proche des conditions définies lors de la première période, le photodétecteur 1 sera également replacé dans des conditions de polarisation proches de celles définies par la première période. Si plusieurs transferts sont réalisés durant la deuxième période, utiliser une valeur cible constante ou sensiblement constante permet d'accroitre la répétabilité des mesures.

Dans un mode de réalisation particulier, le circuit 7 de mesure de la valeur de potentiel du noeud de rétention N peut être activé avant le circuit 6 de transfert des charges électriques. De cette manière, le circuit 7 de mesure va mesurer la valeur du potentiel au noeud N et si ce dernier atteint une valeur seuil cela déclenche le transfert des charges électriques depuis le condensateur C_{PD} vers le condensateur C_{INT}. Lors du transfert des charges, le circuit 7 de mesure peut être actif et il mesure le potentiel du noeud de rétention N. Le circuit 7 de mesure arrête le transfert des charges électriques lorsque le potentiel du noeud de rétention N atteint la valeur cible.

En variante préférentielle, le circuit 7 de mesure de la valeur de potentiel du noeud de rétention N et le circuit 6 de transfert des charges électriques sont activés simultanément de sorte que le transfert des charges ait lieu jusqu'à ce que le potentiel du noeud N atteigne la valeur cible.

Dans un mode de réalisation particulier, le circuit 7 de mesure comporte un transistor T2 monté en suiveur de sorte que le potentiel du noeud de rétention N module la tension délivrée par le transistor T2. Le noeud de rétention N est connecté à l'électrode de commande du transistor T2.

Le transistor T2 est avantageusement un transistor à effet de champ de manière à ce que le noeud de rétention N soit complètement isolé électriquement des autres éléments du circuit. Cette isolation électrique permet d'éviter que des charges électriques soient perdues du noeud N ou injectées dans le noeud N ce qui évite d'introduire un écart à ce qui a été réellement détecté par le photodétecteur. Le signal généré n'est plus faussé et une meilleure corrélation entre le signal optique reçu et le signal électrique peut être obtenue. En d'autres termes, le signal est moins dégradé que dans les circuits de l'art antérieur.

Les charges électriques générées par le photodétecteur 1 ne peuvent pas être perdues car le noeud de rétention N est complètement isolé des autres éléments du circuit, c'est-à-dire par la couche isolante formant le condensateur d'intégration C_{INT}, par l'isolant de grille du transistor T2 et par les isolants des condensateurs.

Le noeud de rétention N est connecté au circuit 7 de mesure de sorte que ce dernier délivre une information représentative du potentiel au noeud N. Selon les modes de réalisation, le circuit 7 peut être configuré pour délivrer une information numérique ou une information analogique.

Cette information est délivrée au circuit 6 de transfert pour initier et/ou bloquer le transfert des charges électriques.

A titre d'exemple illustré à la figure 3, la tension délivrée par le transistor T2 évolue de manière analogique avec la valeur de potentiel du noeud de rétention N. Si une tension représentée sous forme numérique est recherchée, il est possible de connecter en sortie du transistor T2, un convertisseur analogique-numérique qui délivrera une information numérique représentative de la valeur mesurée.

Le circuit 6 de transfert peut être réalisé de différentes manières. Dans un cas de figure, l'activation et l'arrêt du circuit de transfert sont liés à l'émission de signaux par le circuit 7 de mesure qui émet des signaux de type ON/OFF. Le circuit de mesure 7 peut émettre un signal d'activation du circuit 6 de transfert tant que le potentiel du noeud N n'atteint pas la valeur cible.

Dans d'autres cas de figures, les signaux émis par le circuit 7 de mesure sont représentatifs du potentiel du noeud N ce qui permet au circuit 6 de transfert de faire converger le noeud N plus facilement sur la valeur cible.

De manière avantageuse, le signal émis par le circuit 7 de mesure est analysé en temps réel afin d'appliquer une tension sur la deuxième électrode du condensateur C_{INT} et faire converger le noeud N vers la valeur cible.

Dans d'autres cas, les signaux émis par le circuit 7 de mesure sont analysés et l'analyse de ces signaux permet de moduler une charge ou un courant vers la deuxième électrode du condensateur C_{INT}.

Dans le mode de réalisation préférentiel illustré à la figure 3, le circuit 6 de transfert comporte un amplificateur 8 et la tension délivrée par le transistor T2 est appliquée à l'entrée de l'amplificateur 8. L'autre entrée de l'amplificateur 8, est connectée à une source de tension qui délivre une tension Vamp, ici la tension Vamp est avantageusement décalée de la tension Vreset d'une valeur égale à la tension de seuil du transistor T2. Le circuit 6 de transfert est également configuré pour délivrer la valeur de tension qui permet de transférer les charges du détecteur 1 et de sa capacité parasite C_{PD} vers le condensateur C_{INT}.

De cette manière, lorsque le circuit 6 de transfert reçoit une information indiquant que le noeud N s'est éloigné de la valeur cible, l'amplificateur 8 délivre le signal à appliquer pour transférer les charges de C_{PD} vers C_{INT} et le circuit 6 de transfert applique ce signal vers le condensateur C_{INT}. La deuxième électrode du condensateur C_{INT} se charge jusqu'à ce que les charges électriques stockées dans le condensateur C_{PD} soient transférées dans le condensateur C_{INT} et que le potentiel du noeud N revienne au potentiel initial. A ce moment, le circuit de mesure délivre une information, par exemple une tension, indiquant que le noeud N est à la valeur cible et la sortie du circuit de transfert 6 se stabilise à la valeur représentative du signal reçu, et arrête de charger le condensateur C_{INT}. La valeur représentative du signal reçu est disponible sur la sortie OUT du circuit 6 de transfert. Le circuit de transfert 6 peut être arrêté et les charges électriques accumulées dans la deuxième électrode du condensateur C_{INT} sont conservées et le noeud de rétention N peut de nouveau se charger avec les nouvelles charges électriques générées par le photodétecteur 1.

De manière avantageuse, l'amplificateur 8 est formé par un amplificateur opérationnel. De cette manière, la sortie de l'amplificateur 8 est rebouclée en mode intégrateur et délivre en sortie une tension adaptée pour faire converger la tension délivrée par le transistor T2 vers la tension Vamp, c'est-à-dire faire converger le noeud N vers sa valeur initiale. Ce mode de réalisation est particulièrement avantageux car il permet de connecter la sortie du comparateur 8 directement sur la deuxième électrode du condensateur C_{INT} et de disposer dans le même temps d'un signal représentatif du signal optique en sortie du même amplificateur.

Dans le cas où l'amplificateur 8 est formé par un amplificateur opérationnel, il est avantageux de réaliser la remise à zéro de la deuxième électrode du condensateur C_{INT} en court-circuitant la borne de sortie de l'amplificateur 8 avec sa borne d'entrée connectée au circuit de mesure 7. Le court-circuit peut être réalisé au moyen d'un interrupteur qui reçoit sur son électrode de commande le signal Sᵣₑₛₑₜ depuis un générateur de signal.

En variante, le circuit de mesure ou le circuit de transfert peut être configuré pour délivrer une information représentative de la différence entre la valeur de potentiel mesurée au noeud de rétention N et la valeur cible ou une valeur représentative de la valeur cible. Cette information représentative de la différence est utilisée pour définir la variation de tension à appliquer sur la deuxième borne du condensateur C_{INT} ou la quantité de charges électriques à appliquer sur la deuxième électrode du condensateur C_{INT}.

Bien que le circuit de transfert 6 soit illustré dans une configuration avec un amplificateur ce qui est particulièrement avantageux pour faciliter la conversion vers la valeur cible, il est également possible d'utiliser un comparateur pour charger le condensateur C_{INT}.

Dans un mode de réalisation illustré à la figure 3, le circuit 7 de mesure est configuré pour délivrer une tension représentative des charges reçues par le détecteur 1 et stockées sur le noeud N. En effet, lorsque les tensions ont convergée, le noeud N est à sa valeur initiale qui est connue, et les charges du détecteurs sont toutes transférées dans le condensateur C_{INT}, la deuxième électrode du condensateur C_{INT} est alors à un potentiel représentatif des charges issues du détecteur, et ce potentiel est identique à celui de la sortie OUT.

Dans un autre mode de réalisation particulier illustré à la figure 3 et qui peut être combiné avec les autres modes de réalisation décrits précédemment, la deuxième électrode du condensateur C_{INT} est connectée à un condensateur additionnel également appelé condensateur mémoire C_{M}.

La deuxième électrode du condensateur C_{INT} est connectée à la première électrode d'un condensateur de mémoire C_{M}. La deuxième électrode du condensateur de mémoire C_{M} est connectée à une deuxième source de tension de référence, ici la tension V_{REF}. La deuxième source de tension de référence délivre un potentiel fixe.

Il est avantageux d'utiliser le condensateur de mémoire C_{M} de manière à mémoriser la tension appliquée par le circuit 6 lorsque celui-ci charge le condensateur C_{INT}, et de conserver cette tension sur la deuxième électrode du condensateur C_{INT}. Dans le mode de réalisation de la figure 3, la conservation de cette information peut être réalisée en plaçant l'interrupteur T4 à l'état ouvert et par exemple en arrêtant le circuit 6 . De cette manière, la tension présente sur la deuxième électrode du condensateur C_{INT} peut être maintenue plus longtemps et de façon plus précise, cela permet de stabiliser le potentiel du noeud N et donc de réduire son évolution pendant la période d'acquisition. Les charges stockées sur le condensateur C_{M} ne sont pas obligatoirement représentatives des charges électriques générées par le photodétecteu r.

En chargeant la deuxième électrode du condensateur C_{INT}, la première électrode du condensateur C_{M} est également chargée. De cette manière, la tension présente sur la deuxième électrode du condensateur C_{INT} peut être maintenue plus longtemps.

La somme des charges électriques générées par le photodétecteur 1 est stockée dans le condensateur parasite C_{PD} puis dans le condensateur d'intégration C_{INT} au fur et à mesure des transferts. Lorsque le circuit 6 a transféré les charges électriques dans le condensateur C_{INT}, la tension présente sur la deuxième électrode du condensateur C_{INT} est représentative de toutes les charges électriques générées et donc du signal optique reçu durant toute la période d'acquisition.

Lorsque le circuit 6 a transféré les charges électriques dans le condensateur C_{INT}, la deuxième borne du condensateur C_{INT} est connectée à la sortie du circuit de détection de manière à délivrer un signal représentatif du signal optique reçu. La sortie du circuit de détection peut être connectée à un circuit d'analyse (non représenté).

De manière préférentielle, la valeur cible pour le noeud N correspond à la valeur du potentiel du noeud N lorsque le photodétecteur 1 est dans le premier état. Dans le mode de réalisation illustré à la figure 3 et particulièrement avantageux car compact, la tension Vamp appliquée sur l'entrée positive de l'amplificateur opérationnel 8 est égale à la tension Vreset décalée de la valeur de la tension de seuil du transistor T2 lorsque ce transistor est en mode suiveur. De cette manière, le circuit 6 est configuré de manière à ce que la tension appliquée sur la deuxième électrode du condensateur C_{INT} replace le noeud de rétention N au potentiel Vreset comme le ferait le circuit de polarisation 5 lors d'une initialisation du photodétecteur 1.

Bien que le circuit de détection puisse réaliser le transfert en continu des charges générées par le photodétecteur 1, il est particulièrement avantageux de réaliser le transfert des charges électriques de manière périodique, c'est-à-dire avec des alternances de phases de transfert et de phases d'accumulation.

En mesurant périodiquement la valeur du potentiel présent sur le noeud de rétention N et en transférant les charges électriques stockées, il est possible d'éviter que les conditions de polarisation du photodétecteur 1 fluctuent de manière importante. Il est alors possible de comparer de manière quantitative les signaux optiques reçus en comparant les signaux électriques stockés.

De manière à limiter la consommation électrique du circuit de détection, il est particulièrement avantageux de ne pas réaliser la mesure du potentiel du noeud de rétention N en continu mais préférentiellement de manière périodique. Il en va de même pour le transfert des charges électriques depuis le condensateur C_{PD} vers le condensateur d'intégration C_{INT}.

Dans un mode de réalisation particulièrement avantageux car compact, afin de faciliter la mise en oeuvre de ces actions de manière périodique, le circuit comporte avantageusement un interrupteur T3 qui est connecté entre la sortie du circuit 7 de mesure du potentiel du noeud de rétention N, formé ici par le transistor T2 et l'entrée du circuit 6 de transfert. Dans le mode de réalisation de la figure 3, plus particulièrement, l'interrupteur T3 connecte la sortie du transistor T2 à la première entrée de l'amplificateur 8.

Si la mesure du potentiel au noeud N et/ou le transfert des charges électriques sont réalisés périodiquement, il est possible de ne pas alimenter ces circuits de mesure et de transfert lorsqu'ils ne sont pas utilisés. Un gain en consommation électrique est alors obtenu. Cette consommation réduite permet de réduire l'émission photonique parasite et d'améliorer l'intégrité du signal optique reçu.

Si le transfert de charge est réalisé au moins une fois et de préférence de manière périodique, la période d'acquisition peut être décomposée en au moins deux phases distinctes. Dans une première phase également appelée phase d'intégration, le signal optique reçu par le photodétecteur génère des charges électriques qui sont stockées dans le condensateur C_{PD} et dans le condensateur C_{INT}. Dans cette première phase, les interrupteurs T3 et T4 sont à l'état bloquant, c'est-à-dire ouverts. Le potentiel du noeud de rétention N évolue au fur et à mesure que les charges électriques sont stockées.

Dans la deuxième phase, également appelée phase de transfert, les interrupteurs T3 et T4 sont à l'état passant, c'est-à-dire fermés. Le potentiel du noeud N est mesuré et une tension est appliquée sur la deuxième électrode du condensateur C_{INT} de manière à ce que le potentiel du noeud de rétention N soit par exemple égal à la valeur cible. Durant les deux phases de la période d'acquisition, le photodétecteur 1 est à l'état flottant et il génère des charges électriques en fonction du signal optique reçu.

Comme indiqué plus haut, selon les modes de réalisation, les interrupteurs T3 et T4 peuvent être basculés simultanément en recevant le même signal sur leur électrode de commande. Ce cas de figure est illustré à la figure 3 où les interrupteurs T3 et T4 reçoivent le même signal SEL_{Rn}. Il est également possible de prévoir que les interrupteurs T3 et T4 reçoivent des signaux différents, les commandes indépendantes et adaptées de T3 et T4 permettent par exemple de réduire les perturbations sur le noeud N lors des commutations. Le transistor T4 peut être actionné de manière logique entre des états passant et bloquant. Cependant, il est particulièrement avantageux de définir au moins deux états passants dont un des états limite la quantité de courant pouvant traverser le transistor. Cette précaution permet d'éviter les transitions trop brusques de charges électriques ce qui a pour effet de dégrader l'intégrité du signal.

En appliquant, sur la deuxième borne du condensateur C_{INT}, la tension nécessaire pour que le potentiel du noeud de rétention N se replace dans ses conditions initiales ou se rapproche de ses conditions initiales, c'est-à-dire de sa polarisation au début de la période d'acquisition, les charges du noeud de rétention N présentes sur le condensateur parasite C_{PD} sont déplacées sur le condensateur d'intégration C_{INT}.

Le déplacement des charges permet de replacer le noeud d'intégration N dans un niveau de polarisation identique ou sensiblement identique à celui du début de la période d'acquisition ce qui permet de replacer le photodétecteur dans un état de polarisation identique ou quasi-identique à celui du début de la période d'acquisition.

Au fur et à mesure des cycles de transfert, le nombre de charges électriques stockées dans le condensateur C_{INT} augmente. La tension présente sur la deuxième électrode du condensateur C_{INT} à la fin de la deuxième période est représentative du nombre total de charges électriques générées par le photodétecteur durant la période d'acquisition.

La figure 3 illustre un circuit de détection avec un seul photodétecteur 1. Pour former une matrice de détection, il est possible de former une pluralité de dispositifs de détection rangés sous la forme d'une matrice et identiques à ce qui est présenté pour la figure 3. La matrice de détection comprend une pluralité de circuits de détection tels que présentés précédemment. Les circuits de détection sont organisés en rangées et en colonnes.

Il est particulièrement avantageux de prévoir que les circuits de polarisation 5 des circuits de détection reçoivent un même premier signal de synchronisation (RSEL_{RN}). De cette manière, les premières périodes et les deuxièmes périodes sont synchronisées pour la matrice de détection.

Les circuits de polarisation 5 d'une ligne ou d'une colonne de circuits de détection sont connectés à un circuit de commande A configuré pour réaliser un basculement simultané entre la première période et la deuxième période.

La matrice de détection est formée par une pluralité de circuits de détection qui sont organisés selon un ou plusieurs pas de répétition dans une ou deux directions d'organisation, par exemple selon les colonnes et les rangées.

Dans un mode de réalisation, la matrice de détection est divisée en pixels formés par les détecteurs associés au circuit de polarisation 5, au condensateur d'intégration C_{INT} et au circuit de mesure 7. Les pixels sont organisés selon un ou plusieurs pas de répétition dans une ou deux directions d'organisation, par exemple selon les colonnes et les rangées.

La matrice de détection est entourée par une zone dépourvue de détecteur. Cette zone dépourvue de détecteur présente une largeur au moins égale à la largeur d'un pixel, de préférence une largeur au moins égale à deux pixels. La zone dépourvue de détecteur est sous la forme d'un anneau ayant une largeur égale à un moins un pas de répétition, de préférence au moins égale à deux pas de répétition.

Dans un mode de réalisation particulièrement avantageux car compact, le circuit 6 est déporté à l'extérieur de la matrice de photodétecteurs, cela permet de supprimer l'encombrement de cette fonction sur la zone du circuit la plus contrainte en terme de surface disponible, et donc d'augmenter la compacité de la matrice de photodétecteurs. En outre, cela permet d'éloigner la source principale d'émission photonique parasite, de la matrice de photodétecteurs et ainsi d'améliorer l'intégrité du signal optique reçu. La matrice de photodétecteurs est dépourvue de circuit de transfert 6. Le circuit de transfert 6 ou au moins l'amplificateur 8 du circuit de transfert 6 est espacé du photodétecteur le plus proche d'une distance au moins égale à un pas de répétition et de préférence à au moins deux pas de répétition.

Le circuit de transfert 6 est déporté hors de la matrice de détection de manière à réduire voire éliminer les perturbations liées au fonctionnement du circuit de transfert 6 et plus particulièrement au fonctionnement de l'amplificateur 8. Ce décalage du circuit de transfert permet de réduire le niveau du bruit dans les circuits de détection.

Dans un mode de réalisation particulièrement avantageux car compact, le circuit 6 est partagé entre Np photodétecteurs, cela permet de diviser par Np l'encombrement de cette fonction dans la matrice de détection et donc d'augmenter la compacité.

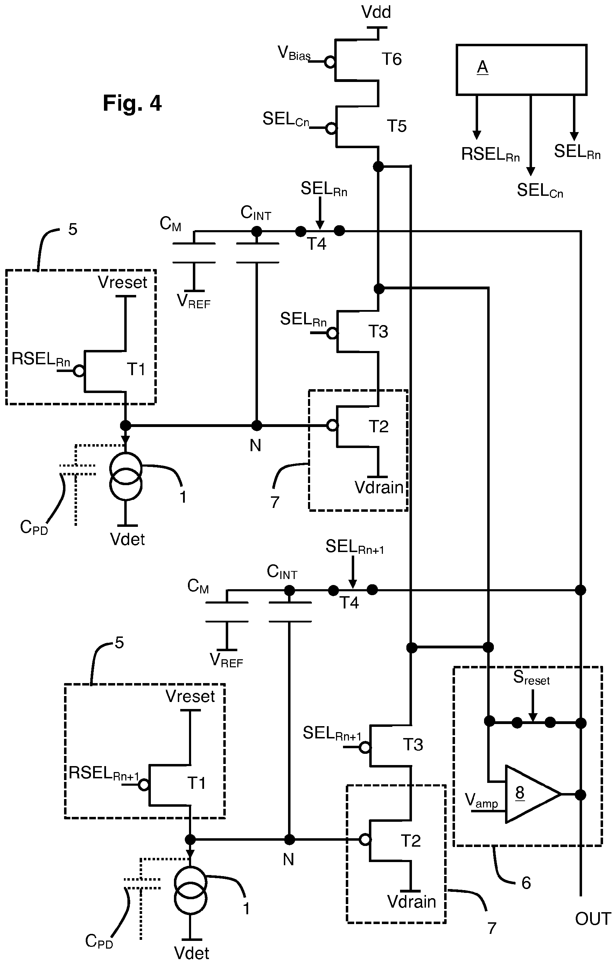

En variante, le circuit 6 de transfert de charges électriques peut être commun à plusieurs circuits de détection d'une rangée ou d'une colonne. La figure 4 illustre une mutualisation pour une colonne.

Si le circuit 6 de transfert est commun à plusieurs circuits de détection, les différentes deuxièmes électrodes des condensateurs C_{INT} et donc les différentes bornes de sortie sont connectées à un même circuit 6 de transfert. De manière à ce que la polarisation d'un condensateur C_{INT} soit associée au noeud de rétention N du même pixel, le circuit comporte avantageusement un interrupteur T4 qui est connecté entre la deuxième électrode du condensateur d'intégration C_{INT} et le circuit 6 de transfert.

Le circuit de commande et le circuit 6 de transfert sont configurés pour réaliser séquentiellement le transfert des charges des noeuds de rétention N desdits circuits de détection durant la deuxième période. De cette manière, de manière séquentielle, durant la deuxième période, les charges électriques présentes dans les noeuds de rétention sont déplacées.

De manière avantageuse, chaque dispositif de détection comporte un transistor T3 et un transistor T4 qui sont rendus passant ou bloquant selon que le dispositif de détection est dans la phase de transfert ou dans la phase d'intégration de la période d'acquisition, c'est-à-dire la deuxième période.

A titre d'exemple, la colonne est formée par n dispositifs de détections représentatifs de n rangées de la matrice.

Lorsque les interrupteurs T3 et T4 d'un premier dispositif de détection sont à l'état passant, les autres interrupteurs T3 et T4 sont à l'état bloquant. De cette manière, chacun des noeuds de rétention N de la colonne peut être analysé seul sans risque de perturbation des autres noeuds de rétention de la colonne.

Le signal SELRn peut donc être un signal d'activation des interrupteurs T3 et T4 du dispositif de rang n de la colonne ou plus généralement de tous les interrupteurs T3 et T4 de la rangée n de la matrice de détection.

Dans le mode de réalisation illustré, une même connexion est utilisée pour relier la sortie de l'amplificateur 8 avec tous les interrupteurs T4 d'une même colonne. Activer séquentiellement les différents interrupteurs T4 permet de ne faire varier le potentiel que d'un seul noeud N à la fois.

Dans la matrice, il est avantageux de relier toutes les bornes d'entrée des circuits 6 de transfert à une même source de polarisation reliée à la tension Vdd par l'intermédiaire d'un interrupteur T5 sélectionnant la colonne recherchée. L'interrupteur T5 reçoit sur son électrode de commande le signal SEL_{Cn}. De cette manière, il est possible de sélectionner les circuits de transfert d'une colonne sans sélectionner les circuits de transferts des autres colonnes.

Il est également avantageux de placer un transistor T6 entre la tension Vdd et l'interrupteur T5 afin de moduler les conditions de polarisation du transistor T2 en mode suiveur.

Cette architecture de dispositif de détection est particulièrement avantageuse dans le domaine de la détection de signaux faibles flux et plus particulièrement dans le domaine de l'astronomie où les signaux recueillis sont très faibles.

Alors que de nombreux travaux sont réalisés sur l'architecture des photodétecteurs de manière à améliorer l'intégrité du signal d'une part, et à étendre la dynamique du signal reçu d'autre part sur des détecteurs tolérant peu les variations de polarisation, le dispositif de détection permet d'obtenir des résultats supérieurs aux deux architectures connues de l'art antérieur, SFD et CTIA.

Le photodétecteur peut être un photodétecteur configuré pour détecter un rayonnement visible ou infrarouge. Dans le domaine de l'infrarouge, le photodétecteur pour être configuré pour détecter au moins une bande spectrale parmi les bandes VLWIR, LWIR, MWIR et SWIR.

Dans le domaine de l'infrarouge et plus particulièrement dans la bande LWIR, le dispositif de détection permet de conserver l'intégrité du signal sur un plus grand domaine de fonctionnement en comparaison des architectures de l'art antérieur.

Bien que le circuit de détection soit présenté avec un photodétecteur, il trouve également un intérêt pour tous les détecteurs qui délivrent un signal électrique en fonction d'un stimulus extérieur, par exemple un capteur de pression.

## Revendications

1. Circuit de détection comportant :
- un détecteur (1) possédant un condensateur parasite (C_{PD}) et configuré pour délivrer des charges électriques en fonction d'un phénomène observé,
- un circuit de polarisation (5) configuré pour polariser le détecteur (1) durant une première période et laisser une première borne du détecteur (1) à un potentiel flottant durant une deuxième période,
circuit **caractérisé en ce qu'**il comporte
- un premier condensateur (C_{INT}) ayant une première borne connectée à la première borne du détecteur (1) pour former un noeud de rétention (N) avec le condensateur parasite (C_{PD}), le noeud de rétention (N) se trouvant à une valeur cible durant la première période et évoluant durant la deuxième période,
- un circuit (6) de transfert des charges électriques depuis le condensateur parasite (C_{PD}) vers le premier condensateur (C_{INT}), le circuit (6) de transfert des charges électriques étant configuré pour polariser une deuxième borne du premier condensateur (C_{INT}) de manière à décaler le potentiel du noeud de rétention (N) vers la valeur cible et pour bloquer le transfert des charges électriques lorsque le potentiel du noeud de rétention atteint une valeur prédéfinie,
- une borne de sortie délivrant une tension représentative du potentiel présent sur la deuxième borne du premier condensateur (C_{INT}).

2. Circuit selon la revendication 1, **caractérisé en ce qu'**il comporte un circuit (7) de mesure configuré pour mesurer le potentiel du noeud de rétention (N) et **en ce que** le circuit (7) de mesure délivre une information représentative du potentiel du noeud de rétention (N) au circuit (6) de transfert de manière à ce que le circuit (6) de transfert délivre une tension configurée pour transférer les charges électriques depuis le condensateur parasite (C_{PD}) vers le premier condensateur (C_{INT}).

3. Circuit selon la revendication 2, **caractérisé en ce que** le circuit (7) de mesure comporte un transistor suiveur (T2) ayant une électrode de commande connectée au noeud de rétention (N) de sorte à moduler la tension délivrée par le transistor suiveur (T2) en fonction du potentiel du noeud de rétention (N).

4. Circuit selon la revendication 3, **caractérisé en ce que** la sortie du transistor suiveur (T2) est connectée au circuit (6) de transfert et **en ce que** le transfert des charges électriques depuis le condensateur parasite (C_{PD}) vers le premier condensateur (C_{INT}) est arrêté lorsque le transistor suiveur (T2) délivre une tension représentative de la valeur cible.

5. Circuit selon l'une quelconque des revendications 2 à 4, **caractérisé en ce que** le circuit (6) de transfert comporte un amplificateur (8) recevant, sur une première entrée, une valeur représentative du potentiel du noeud de rétention (N) et, sur une deuxième entrée, une valeur représentative de la valeur cible, une sortie de l'amplificateur (8) étant connectée pour appliquer une tension sur la deuxième borne du premier condensateur (C_{INT}).

6. Circuit selon la revendication précédente, **caractérisé en ce que** l'amplificateur (8) est formé par un amplificateur opérationnel et **en ce que** la sortie de l'amplificateur opérationnel alimente la deuxième électrode du premier condensateur (C_{INT}).

7. Circuit selon la revendication précédente, **caractérisé en ce que** le circuit de polarisation (5) applique une première valeur de tension (Vreset) à la première électrode du détecteur (1) durant la première période et **en ce que** l'amplificateur opérationnel reçoit sur une première entrée une tension (Vamp) décalée de ladite première valeur de tension (Vreset) d'une valeur égale à la tension de seuil du transistor (T2) monté en suiveur.

8. Circuit selon l'une quelconque des revendications précédentes, **caractérisé en ce qu'**il comporte un deuxième condensateur (C_{M}) ayant une première borne connectée à la deuxième borne du premier condensateur (C_{INT}) et une deuxième borne connectée à une seconde source de tension délivrant un potentiel fixe.

9. Circuit selon l'une quelconque des revendications précédentes, **caractérisé en ce qu'**il comporte un interrupteur de transfert (T4) configuré pour autoriser ou bloquer le passage de charges électriques entre la deuxième électrode du premier condensateur (C_{INT}) et le circuit (6) de transfert.

10. Circuit selon l'une quelconque des revendications précédentes, **caractérisé en ce qu'**il comporte un interrupteur de mesure (T3) connecté entre le circuit de mesure (7) et le circuit de transfert (6).

11. Circuit selon l'une des revendications 9 et 10, **caractérisé en ce que** l'interrupteur de mesure (T3) et/ou l'interrupteur de transfert (T4) sont formés par un transistor à effet de champ.

12. Circuit selon l'une des revendications 9 à 11, **caractérisé en ce que** l'interrupteur de transfert (T4) et l'interrupteur de mesure (T3) reçoivent un même signal de synchronisation (SEL_{RN}) sur leur électrode de commande.

13. Circuit selon l'une des revendications 9 à 12, **caractérisé en ce que** il comporte un circuit de commande configuré pour activer au moins deux fois le circuit (6) de transfert de charges durant la deuxième période, le circuit de commande étant configuré pour bloquer le transfert de charge entre deux phases consécutives d'activation du circuit (6) de transfert de charges.

14. Circuit selon la revendication 13, **caractérisé en ce que** le circuit de commande est configuré pour basculer l'interrupteur de transfert (T4) à l'état bloquant entre les deux phases consécutives d'activation du circuit (6) de transfert de charges.

15. Matrice de détection comprenant une pluralité de circuits de détection selon l'une quelconque des revendications 1 à 14 organisés en rangées et en colonnes.

16. Matrice de détection selon la revendication 15, **caractérisée en ce que** les circuits de polarisation (3) des circuits de détection reçoivent un même premier signal de synchronisation (RSEL_{RN}).

17. Matrice de détection selon l'une des revendications 15 et 16, **caractérisée en ce qu'**un circuit (6) de transfert est commun à une pluralité de circuits de détections.

18. Matrice de détection selon la revendication 17, **caractérisée en ce que** les circuits de polarisation (5) d'une rangée ou d'une colonne de circuits de détection sont connectés à un circuit de commande configuré pour réaliser un basculement simultané entre la première période et la deuxième période et **en ce que** le circuit de commande et le circuit de transfert (6) sont configurés pour réaliser séquentiellement le transfert des charges des noeuds de rétention (N) desdits circuits de détection durant la deuxième période.

## Patentansprüche

1. Detektionsschaltung, umfassend:
- einen Detektor (1), der einen parasitären Kondensator (C_{PD}) aufweist und ausgelegt ist, elektrische Ladungen als Funktion eines beobachteten Phänomens zu liefern,
- eine Polarisationsschaltung (5), die ausgelegt ist, den Detektor (1) während einer ersten Periode zu polarisieren und einen ersten Anschluss des Detektors (1) auf einem schwebenden Potential während einer zweiten Periode zu belassen,
wobei die Schaltung **dadurch gekennzeichnet ist, dass** diese umfasst:
- einen ersten Kondensator (C_{INT}) mit einem ersten Anschluss, der mit dem ersten Anschluss des Detektors (1) verbunden ist, um einen Retentionsknoten (N) mit dem parasitären Kondensator (C_{PD}) zu bilden, wobei sich der Retentionsknoten (N) während der ersten Periode auf einem Zielwert befindet und sich während der zweiten Periode entwickelt,
- eine Schaltung (6) für den Transfer elektrischer Ladungen von dem parasitären Kondensator (C_{PD}) zu dem ersten Kondensator (C_{INT}), wobei die Schaltung (6) für den Transfer elektrischer Ladungen ausgelegt ist, einen zweiten Anschluss des ersten Kondensators (C_{INT}) zu polarisieren, um das Potential des Retentionsknotens (N) zu dem Zielwert zu verschieben, und um den Transfer elektrischer Ladungen zu blockieren, wenn das Potential des Retentionsknotens einen vordefinierten Wert erreicht,
- einen Ausgangsanschluss, der eine Spannung liefert, die für das Potential repräsentativ ist, das an dem zweiten Anschluss des ersten Kondensators (C_{INT}) vorliegt.

2. Schaltung nach Anspruch 1, **dadurch gekennzeichnet, dass** diese einen Messschaltung (7) umfasst, die ausgelegt ist, das Potential des Retentionsknotens (N) zu messen, und dadurch, dass die Messschaltung (7) eine Information, die für das Potential des Retentionsknotens (N) repräsentativ ist, an die Transferschaltung (6) liefert, so dass die Transferschaltung (6) eine Spannung liefert, die ausgelegt ist, die elektrischen Ladungen von dem parasitären Kondensator (C_{PD}) zu dem ersten Kondensator (C_{INT}) zu transferieren.

3. Schaltung nach Anspruch 2, **dadurch gekennzeichnet, dass** die Messschaltung (7) einen Folgetransistor (T2) mit einer Steuerelektrode umfasst, die mit dem Retentionsknoten (N) verbunden ist, um die Spannung, die von dem Folgetransistor (T2) geliefert wird, als Funktion des Potentials des Retentionsknotens (N) zu modulieren.

4. Schaltung nach Anspruch 3, **dadurch gekennzeichnet, dass** der Ausgang des Folgetransistors (T2) mit der Transferschaltung (6) verbunden ist, und dadurch, dass der Transfer der elektrischen Ladungen von dem parasitären Kondensator (C_{PD}) zu dem ersten Kondensator (C_{INT}) angehalten wird, wenn der Folgetransistor (T2) eine Spannung liefert, die für den Zielwert repräsentativ ist.

5. Schaltung nach einem der Ansprüche 2 bis 4, **dadurch gekennzeichnet, dass** die Transferschaltung (6) einen Verstärker (8) umfasst, welcher, an einem ersten Eingang, einen Wert, der für das Potential des Retentionsknotens (N) repräsentativ ist, und, an einem zweiten Eingang, einen Wert, der für den Zielwert repräsentativ ist, empfängt, wobei ein Ausgang des Verstärkers (8) angeschlossen ist, um eine Spannung an den zweiten Anschluss des ersten Kondensators (C_{INT}) anzulegen.

6. Schaltung nach dem vorhergehenden Anspruch, **dadurch gekennzeichnet, dass** der Verstärker (8) durch einen Operationsverstärker gebildet wird, und dadurch, dass der Ausgang des Operationsverstärkers die zweite Elektrode des ersten Kondensators (C_{INT}) versorgt.

7. Schaltung nach dem vorhergehenden Anspruch, **dadurch gekennzeichnet, dass** die Polarisationsschaltung (5) einen ersten Spannungswert (Vreset) an die erste Elektrode des Detektors (1) während der ersten Periode anlegt, und dadurch, dass der Operationsverstärker an einem ersten Eingang eine Spannung (Vamp) empfängt, die von dem ersten Spannungswert (Vreset) um einen Wert gleich der Schwellenspannung des Transistors (T2) versetzt ist, der als Folger montiert ist.

8. Schaltung nach einem der vorhergehenden Ansprüche, **dadurch gekennzeichnet, dass** diese einen zweiten Kondensator (C_{M}) mit einem ersten Anschluss umfasst, der mit dem zweiten Anschluss des ersten Kondensators (C_{INT}) verbunden ist, und mit einem zweiten Anschluss, der mit einer zweiten Spannungsquelle verbunden ist, die ein festes Potential liefert.

9. Schaltung nach einem der vorhergehenden Ansprüche, **dadurch gekennzeichnet, dass** diese einen Transferunterbrecher (T4) umfasst, der ausgelegt ist, den Durchgang elektrischer Ladungen zwischen der zweiten Elektrode des ersten Kondensators (C_{INT}) und der Transferschaltung (6) zu autorisieren oder zu blockieren.

10. Schaltung nach einem der vorhergehenden Ansprüche, **dadurch gekennzeichnet, dass** diese einen Messunterbrecher (T3) umfasst, der zwischen der Messschaltung (7) und der Transferschaltung (6) angeschlossen ist.

11. Schaltung nach einem der Ansprüche 9 und 10, **dadurch gekennzeichnet, dass** der Messunterbrecher (T3) und/oder der Transferunterbrecher (T4) durch einen Feldeffekt-Transistor gebildet werden.

12. Schaltung nach einem der Ansprüche 9 bis 11, **dadurch gekennzeichnet, dass** der Transferunterbrecher (T4) und der Messunterbrecher (T3) dasselbe Synchronisationssignal (SEL_{RN}) an der Steuerelektrode empfangen.

13. Schaltung nach einem der Ansprüche 9 bis 12, **dadurch gekennzeichnet, dass** diese eine Steuerschaltung umfasst, die ausgelegt ist, mindestens zweimal die Schaltung (6) für den Transfer von Ladungen während der zweiten Periode zu aktivieren, wobei die Steuerschaltung ausgelegt ist, den Ladungstransfer zwischen zwei konsekutiven Aktivierungsphasen der Schaltung (6) für den Transfer von Ladungen zu blockieren.

14. Schaltung nach Anspruch 13, **dadurch gekennzeichnet, dass** die Steuerschaltung ausgelegt ist, den Transferunterbrecher (T4) in den Blockierungszustand zwischen zwei konsekutiven Aktivierungsphasen der Schaltung (6) für den Transfer von Ladungen umzuschalten.

15. Detektionsmatrix, umfassend eine Vielzahl von Detektionsschaltungen nach einem der Ansprüche 1 bis 14, die in Reihen und in Spalten organisiert sind.

16. Detektionsmatrix nach Anspruch 15, **dadurch gekennzeichnet, dass** die Polarisationsschaltungen (3) der Detektionsschaltungen dasselbe erste Synchronisationssignal (RSEL_{RN}) empfangen.

17. Detektionsmatrix nach einem der Ansprüche 15 und 16, **dadurch gekennzeichnet, dass** eine Vielzahl von Detektionsschaltungen eine Transferschaltung (6) gemeinsam hat.

18. Detektionsmatrix nach Anspruch 17, **dadurch gekennzeichnet, dass** die Polarisationsschaltungen (5) einer Reihe oder einer Spalte von Detektionsschaltungen mit einer Steuerschaltung verbunden sind, die ausgelegt ist, ein gleichzeitiges Umschalten zwischen der ersten Periode und der zweiten Periode durchzuführen, und dadurch, dass die Steuerschaltung und die Transferschaltung (6) ausgelegt sind, sequentiell den Transfer der Ladungen der Retentionsknoten (N) der Detektionsschaltungen während der zweiten Periode durchzuführen.

## Claims

1. Detection circuit comprising:
- a detector (1) having a stray capacitor (C_{PD}), and configured to deliver electric charges according to an observed phenomenon,
- a bias circuit (5) configured to bias the detector (1) during a first period and to leave a first terminal of the detector (1) at a floating potential during a second period,
circuit **characterized in that** it comprises
- a first capacitor (C_{INT}) having a first terminal connected to the first terminal of the detector (1) to form an integration node (N) with the stray capacitor (C_{PD}), the integration node (N) being at a target value during the first period and at a changing value during the second period,
- a transfer circuit (6) configured to transfer electric charges from the stray capacitor (C_{PD}) to the first capacitor (C_{INT}), the transfer circuit (6) being configured to bias a second terminal of the first capacitor (C_{INT}) so as to shift the potential of the integration node (N) to the target value and to disable transfer of the electric charges when the potential of the integration node reaches a predefined value,
- an output terminal delivering a voltage representative of the potential present on the second terminal of the first capacitor (C_{INT}).

2. Circuit according to claim 1, **characterized in that** it comprises a measurement circuit (7) configured to measure the potential of the integration node (N) and **in that** the measurement circuit (7) delivers data representative of the potential of the integration node (N) to the transfer circuit (6) so that the transfer circuit (6) delivers a voltage configured to transfer the electric charges from the stray capacitor (C_{PD}) to the first capacitor (C_{INT}).

3. Circuit according to claim 2, **characterized in that** the measurement circuit (7) comprises a follower transistor (T2) having a control electrode connected to the integration node (N) so as to modulate a voltage delivered by the follower transistor (T2) according to the potential of the integration node (N).

4. Circuit according to claim 3, **characterized in that** the output of the follower transistor (T2) is connected to the transfer circuit (6) and **in that** transfer of the electric charges from the stray capacitor (C_{PD}) to the first capacitor (C_{INT}) is stopped when the follower transistor (T2) delivers a voltage representative of the target value.

5. Circuit according to any one of claims 2 to 4, **characterized in that** the transfer circuit (6) comprises an amplifier (8) receiving a value representative of the potential of the integration node (N) on a first input, and a value representative of the target value on a second input, an output of the amplifier (8) being connected to apply a voltage on the second terminal of the first capacitor (C_{INT}).

6. Circuit according to preceding claim, **characterized in that** the amplifier (8) is formed by an operational amplifier and **in that** the output of the operational amplifier supplies voltage to the second terminal of the first capacitor (C_{INT}).

7. Circuit according to preceding claim, **characterized in that** the bias circuit (5) applies a first voltage value (Vreset) to the first terminal of the detector (1) during the first period and **in that** the operational amplifier receives on a first input a voltage (Vamp) offset from said first voltage value (Vreset) by a value equal to a threshold voltage of a transistor (T2) connected as follower transistor.

8. Circuit according to any one of the foregoing claims, **characterized in that** it comprises a second capacitor (C_{M}) having a first terminal connected to the second terminal of the first capacitor (C_{INT}) and a second terminal connected to a second voltage source delivering a fixed potential.

9. Circuit according to any one of the foregoing claims, **characterized in that** it comprises a transfer switch (T4) configured to enable or disable the flow of electric charges between the second terminal of the first capacitor (C_{INT}) and the transfer circuit (6).

10. Circuit according to any one of the foregoing claims, **characterized in that** it comprises a measurement switch (T3) connected between the measurement circuit (7) and the transfer circuit (6).

11. Circuit according to one of claims 9 and 10, **characterized in that** the measurement switch (T3) and/or the transfer switch (T4) are formed by a field effect transistor.

12. Circuit according to one of claims 9 to 11, **characterized in that** the transfer switch (T4) and the measurement switch (T3) receive a same synchronisation signal (SEL_{RN}) on their control electrode.

13. Circuit according to one of claims 9 to 12, **characterized in that** it comprises a control circuit configured to activate the transfer circuit (6) at least twice during the second period, the control circuit being configured to disable charge transfer between two consecutive activation phases of the transfer circuit (6).

14. Circuit according to claim 13, **characterized in that** the control circuit is configured to switch the transfer switch (T4) to off state between the two consecutive activation phases of the transfer circuit (6).

15. Detection matrix comprising a plurality of detection circuits according to any one of claims 1 to 14 organised in rows and in columns.

16. Detection matrix according to claim 15, **characterized in that** the bias circuits (3) of the detection circuits receive a same first synchronisation signal (RSEL_{RN}).

17. Detection matrix according to one of claims 15 and 16, **characterized in that** a transfer circuit (6) is common to a plurality of detection circuits.

18. Detection matrix according to claim 17, **characterized in that** the bias circuits (5) of a row or of a column of detection circuits are connected to a control circuit configured to perform simultaneous switching between the first period and second period and **in that** the control circuit and transfer circuit (6) are configured to perform transfer of the charges from the integration nodes (N) of said detection circuits sequentially during the second period.
